# EUROPÄISCHE PATENTSCHRIFT

(11) **EP 0 303 976 B1**
(45) Veröffentlichungstag und Bekanntmachung des Hinweises auf die Patenterteilung: **13.10.1993**
(21) Anmeldenummer: 88113101.5
(22) Anmeldetag: 12.08.1988
(51) Int. Cl.: B65D 17/28, B65D 5/74

(54) **Quaderförmige Flüssigkeitspackung**
Quadrangular container for fluids
Récipient quadrangulaire pour produits fluides

(30) Priorität: 19.08.1987 DE 3727589
(43) Veröffentlichungstag der Anmeldung: 22.02.1989
(73) Patentinhaber: Tetra Laval Holdings & Finance SA, 1009 Pully (CH)
(72) Erfinder: Reil, Wilhelm, D-6142 Bensheim 1 (DE)
(74) Vertreter: Weber, Dieter, Dr.

(56) Entgegenhaltungen:
- EP-A- 0 152 009
- EP-A- 0 241 844

## Beschreibung

Die Erfindung betrifft eine Packung für fließfähige Füllgüter mit einem durch mindestens eine Längssiegelnaht gebildeten Tubus, an dessen Enden Boden und Deckel angebracht sind, von denen der Deckel aus thermoplastischem Kunststoff ohne Trägermaterial besteht, an dem Tubus längs dessen Oberkante angespritzt ist und eine Ausgießeinrichtung aufweist, wobei der Tubus aus mindestens einseitig mit thermoplastischem Kunststoff beschichtetem Trägermaterial, zum Beispiel Karton, besteht, der Boden viereckig ist und aus dem umgefalteten Tubus der Packung als Faltverschluß ausgebildet ist.

Derartige Packungen sind bekannt und haben in Draufsicht entweder einen runden oder dreieckigen Deckel. Am weitesten fortentwickelt sind die Packungen mit dem in Draufsicht runden Deckel, weil die Spritzwerkzeuge zum Anspritzen des runden Deckels an die Oberkante des Tubus am besten mit runden Werkzeugen hergestellt werden können.

Das allgemeine Problem für Fließmittelpackungen besteht einerseits in der Dichtigkeit und andererseits in der guten Öffnungsmöglichkeit für den Endverbraucher, wobei preiswerte Herstellungsverfahren angestrebt werden. Spritzformlinge können - soweit sie entformbar gestaltet werden - die unterschiedlichsten Formen erhalten, und so sind auch zahlreiche Varianten für Ausgießeinrichtungen bekannt, die an dem aus thermoplastischem Kunststoff ohne Trägermaterial bestehenden Deckel angeformt sind. Der Hersteller bevorzugt dünne Kunststofflächen, weil dadurch der Deckel preiswerter wird. Wegen der unvermeidbaren Distributionsprobleme sind Deckel und Boden bevorzugt eben ausgebildet oder haben wenigstens teilweise ebene Oberflächen, die bei dünner Ausgestaltung der Deckelwände entsprechend biegsam und elastisch sind. Das ist beim Stapeln wegen der Gefahr des Eindrückens unerwünscht und begünstigt auch nicht das Öffnen der Ausgießeinrichtung. Die bekannten Ausgießeinrichtungen haben häufig eine mit einem angeformten Griff versehene Verschließklappe und sollen vom Endverbraucher über diesen Griff geöffnet werden.

Die bekannte Packung mit dem runden Deckel weist zwar in der Nähe ihrer Außenkante eine Ausgießeinrichtung auf, das Öffnen derselben ist aber schwierig, insbesondere deshalb, weil an der Befestigungsstelle zwischen Griff und Verschließklappe weder der Deckel noch der angrenzende Tubus eine feste, steife und klar definierte Stelle vorgibt, an welcher die Kräfte zum erstmaligen Öffnen der Ausgießeinrichtung eingeleitet werden. Vielmehr besteht eine recht große Elastizität der Materialien, wodurch das Aufreißen schwierig und ungenau wird, weil die Bereiche neben der Krafteinleitstelle zu stark nachgeben.

Abgesehen davon, daß die bekannten Packungen mit rundem Deckel auch einen runden Tubus im Bereich des Deckels haben und infolgedessen eine schlechte Raumausnutzung insbesondere bei der Distribution (Transport) vorgeben, sind viele Verschließklappen bekannter Packungen vollständig abreißbar und gehen dann verloren, so daß das Wiederverschließen erschwert wird; oder bei an einer Lasche festgehaltenen Verschließklappe ist ein gezieltes Einführen in die aufgerissene Ausgießöffnung schwierig, mindestens aber ein Verrasten für ein gutes Wiederverschließen kaum gewährleistet. Schließlich hat man bei den bekannten Packungen auch festgestellt, daß häufig nicht ein definierter Gießstrahl erreicht ist, weil Gießkanten nur bei speziellen Ausgestaltungen vorgesehen werden können und insbesondere bei runden Deckeln schwierig anzubringen sind.

Der Erfindung liegt daher die Aufgabe zugrunde, die bekannten Packungen dahingehend mit Verbesserungen auszugestalten, daß ein leichteres Öffnen möglich ist, vorzugsweise die Verschließklappe geöffnet gehalten werden kann und dennoch zum Wiederverschließen in möglichst definierter Lage gehalten und mit Mitteln versehen ist, um die Verschließklappe gut in die Ausgießöffnung wieder einzuführen und darin zu halten. Außerdem sollte die Ausgießöffnung möglichst dicht wiederverschließbar sein, weitgehend gegen Verschmutzungen durch nicht vollständig ausgeschütteten Packungsinhalt geschützt und für die Erreichung eines definierten Ausgießstrahles ausgestaltet sein.

Zur Lösung der vorstehenden Aufgabe ist die Erfindung dadurch gekennzeichnet, daß die Packung über ihre gesamte Höhe vom Boden bis zur äußeren Ebene des Deckels einen viereckigen Querschnitt hat, die Papierfasern des Tubusmaterials quer zur Längssiegelnaht ausgerichtet sind, die Längssiegelnaht nahe einer Kante des Tubus angeordnet ist, der Deckel in Draufsicht viereckig ist und die Ausgießeinrichtung mit angespritztem Griff im wesentlichen innerhalb der quaderförmigen, durch die Höhe und die vier Kanten des Querschnittes vorgegebenen Außenkontur der Packung angeordnet ist.

Gegenüber den bekannten Packungen mit rundem Deckel wird durch die in Draufsicht viereckige Form des neuen Deckels, wenn der in Draufsicht viereckige Boden beibehalten wird, der Tubus über seine gesamte Höhe im Querschnitt viereckig. Der Fachmann erkennt sofort, daß sich hierdurch eine hervorragende Distributionsmöglichkeit und Raumausnutzung beim Transport und bei der Lagerung ergibt. Hierbei ist es gleichgültig, ob je nach Ausführungsform der Erfindung der Querschnitt des Tubus quadratisch oder rechteckig ist. Die Herstellung von Spritzwerkzeugen zum Anbringen des viereckigen Deckels an der Oberkante des Tubus ist ohne technische Probleme erreichbar. Es ist möglich, die erfindungsgemäße Ausgießeinrichtung zugleich mit angespritztem Griff zu versehen und wie bei an sich bekannten Deckeln, die in Draufsicht rund sind, im wesentlichen innerhalb der Außenkontur der fertigen Packung anzuordnen, d.h. nach dem Füllen und Verschließen vor dem Transport oder der Lagerung. Wenn dabei die Gießkante geringfügig die Außenkontur durchdringt, so ist dies vernachlässigbar und wirkt sich bei der guten Stapelfähigkeit der Packung nicht aus. Außerdem ist die Gießkante weich, weil sie ein dünnes Kunststoffplättchen ist, und kann bei Druck von außen in jede Richtung ausweichen.

Auch bei bekannten Packungen weist der Tubus eine Längssiegelnaht auf. Diese erstreckt sich vom Boden zum Deckel und kann beispielsweise durch Überlappung hergestellt werden. Neben der freien Endkante oder Schnittkante auf der einen Seite des Tubus wird also der sich längs über die Höhe des Tubus erstreckende Streifen der anderen Seite befestigt, in aller Regel durch Längssiegeln und vorzugsweise mit Kantenschutz wenigstens zur Packungsinnenseite hin, damit im Falle von Flüssigkeiten diese nicht in die Schnittkante und damit die Papierfasern eindringen und die Längssiegelnaht an dieser Stelle zerstören kann. Es versteht sich, daß im Bereich der Längssiegelnaht eine gewisse Versteifung des Tubus erfolgt, nicht zuletzt durch die Anordnung des doppelwandigen Kartonstreifens. Wird dieser nur gemäß der Lehre der Erfindung nahe einer Kante des im Querschnitt viereckigen Tubus angeordnet, dann wird hierdurch eben diese Kante besonders verstärkt und hierbei besonders in Richtung der Ebene, in welcher der doppelte Kartonstreifen liegt. Druck in dieser Ebene auf die Tubuskante erfährt daher an dieser Stelle einen hohen Widerstand; mit anderen Worten ist die Packung auf Druck in Richtung der Ebene mit der Längssiegelnaht widerstandsfähig, steif und gut zu handhaben.

Zum Ausgießen des Inhalts der erfindungsgemäßen Packung verwendet der Durchschnittsverbraucher die rechte Hand, wobei er die Packung zwischen dem Daumen auf der einen Seite und den vier Fingern seiner Hand auf der anderen Seite ergreift. Durch den viereckigen Querschnitt des Tubus über seine gesamte Höhe erreicht man eine gute Steifigkeit der Packung für den Endverbraucher, insbesondere für den Ausgießvorgang.

Diese Versteifung wird erfindungsgemäß noch weiter dadurch verbessert, daß die Richtung der Papierfasern des Tubusmaterials quer zur Längssiegelnaht verläuft, d.h. etwa in Richtung der Querschnittsebenen des Tubus. Berücksichtigt man die Greifbewegung des Benutzers, dann versteht der Fachmann die Vorteile der erhöhten Versteifung des Packungsmaterials und damit der besseren Ausgießmöglichkeit.

Bei zweckmäßiger weiterer Ausgestaltung der Erfindung ist vorgesehen, daß die in einer Ecke und in einer Vertiefung des Deckels angeordneter Ausgießeinrichtung eine mit einer Verschließklappe versehene, etwa ovale und an einer Stelle im wesentlichen in eine Spitze auslaufende Ausgießöffnung aufweist, deren Spitze nahe der Deckelecke liegt. Zum Erreichen eines definierten Gießstrahles (gutes Ausgießen) ist die Ausgießeinrichtung und speziell die zu dieser gehörende Ausgießöffnung so in einer Ecke des viereckigen Deckels angeordnet, daß die Spitze der Ausgießöffnung möglichst weit in die Ecke hineinreicht. Liegt die Ausgießöffnung außerdem in einer Vertiefung des Deckels, ohne daß bei einer besonders bevorzugten Ausführungsform die Ausgießöffnung etwa mit einem Rand oder einer Wulst außen versehen wäre, dann wird die Hygiene der neuen Ausgießeinrichtung verbessert, weil jeglicher Packungsinhalt,der im allgemeinen an die tiefste Stelle fließt bzw. rieselt, von selbst in die Ausgießöffnung zurückgelangt.

Günstig ist es ferner, wenn die Längssiegelnaht nahe derjenigen Tubuskante angeordnet ist, welche nächst der unter der Ausgießöffnungsspitze liegenden Tubuskante angeordnet ist. Die Handhabung zum Ausgießen ist durch dieses Merkmal begünstigt, weil die verstärkte Tubuskante, nämlich dort, wo die Längssiegelnaht an der Tubuskante liegt, im Bereich des Daumens zu liegen kommt, wo der Benutzer den größten Druck auf den Tubus ausübt. Für den Rechtshänder, wie der Benutzer normalerweise beurteilt wird, liegt die durch die Längssiegelnaht verstärkte Tubuskante rechts neben derjenigen Tubuskante, welche unter der Spitze der Ausgießöffnung liegt. Mit anderen Worten: Blickt man von oben auf den vierekkigen Deckel, dann liegt die Spitze der Ausgießöffnung über der einen Tubuskante und die nächst zu dieser angeordnete Tubuskante mit der Längssiegelnaht liegt dann in Gegenuhrzeigerrichtung daneben (im Falle von Linkshändern im Uhrzeigersinn daneben). Man erkennt die Schaffung einer leichten Öffnungsvorrichtung mit leichter Ausgießmöglichkeit gemäß der Erfindung.

Vorteilhaft ist es ferner, wenn der Griff mit der Verschließklappe über einen Zugsteg an der Spitze der Verschließklappe im Bereich der Ausgießöffnungsspitze verbunden ist und auf die ebene Fläche der Verschließklappe umfaltbar ist. Für eine gute Öffnungsvorrichtung gehört auch das leichte Öffnen derselben. Erfindungsgemäß werden die Öffnungskräfte vom Griff durch den Zugsteg auf eine Stelle gelenkt, welche in der Spitze der Verschließklappe liegt, und diese befindet sich im Bereich der Spitze der Ausgießöffnung. Die Aufreißkräfte greifen also an der Spitze der Verschließklappe neben der Spitze der Ausgießöffnung an. Der Fachmann weiß, daß zu einer Spitze hingeführte Aufreißkräfte mit Sicherheit das Öffnen an dieser Spitze beginnen lassen. Das aber ist gerade der erfindungsgemäße Wunsch zum Öffnen der Ausgießeinrichtung.

Wenn außerdem der Griff auf die ebene Fläche der Verschließklappe umfaltbar ist, kann die fertig gefüllte und verschlossene Packung unter optimaler Raumausnutzung gelagert, transportiert und insbesondere gestapelt werden, weil ein etwa senkrecht aus dem Deckel nach oben herausstehender Griff nicht vorhanden ist; vielmehr dieser Griff in die Ebene umgefaltet ist. Dieses Umfalten gelingt in ansich bekannter Weise dadurch, daß nach dem Entformen des Deckels der angespritzte Griff vorzugsweise in dem Augenblick, wenn die Verbindungsteile mit der Verschließklappe noch nicht ganz ausgehärtet sind, auf die ebene Fläche der Verschließklappe umgefaltet und aufgelegt wird. Zum Öffnen ist es für den Endbenutzer ein leichtes, den umgelegten Griff nach oben in eine Ebene senkrecht zur Hauptebene des Deckels zu stellen, um den Greif und Aufreißvorgang durchzuführen.

Zur Steigerung der Hygiene der Ausgießeinrichtung ist oben gesagt worden, daß diese sich in eine Vertiefung des Deckels befindet. Bei vorteilhafter Ausgestaltung der Erfindung ist nun vorgesehen, daß diese Vertiefung des Deckels die gesamte Ausgießeinrichtung umgibt und durch vordere Schrägfelder sowie eine Rückwand gebildet ist. Es handelt sich vorzugsweise um eine seichte Vertiefung (mit geringer Höhe). Denkt man sich die Ausgießöffnung in der unteren Ebene der Vertiefung und die äußere Oberfläche der Hauptwandung des Deckels in einer gedachten oberen Ebene, ist der Abstand zwischen der äußeren oberen Ebene und der unteren oder inneren Ebene der Vertiefung mit der Ausgießöffnung gering, bei einer Packung mit einem Volumen von etwa einem Liter etwa 3 bis 6 mm. Ein solcher Deckel kann mit technisch gut beherrschbaren Spritzwerkzeugen hergestellt werden. Die Hauptebene des Deckels befindet sich dann oben bzw. außen und dient als Standfläche für die nächst darüber anzuordnende Packung im Falle des Transports oder der Lagerung; während die Ausgießeinrichtung wenigstens teilweise selbst auch dadurch zur Standfläche und Unterstützung der nächst darüberliegenden Pakkung dient und verwendet werden kann, daß der oben außen auf der Verschließklappe angeformte Griff in der schon beschriebenen Weise umgelegt wird auf die ebene Fläche der Verschließklappe, wodurch das nach dem Umfalten sich ergebende Außenmaß wieder die äußerste obere Ebene und damit die Standfläche bildet.

Durch die Anordnung der Ausgießeinrichtung in der Ecke des Deckels und insbesondere derart, daß die Spitze der Ausgießöffnung möglichst weit nach außen in die Deckelecke gelegt wird, erreicht man also nicht nur eine hygienische Öffnung mit einem guten und definierten Ausgießstrahl, sondern auch das Öffnen ist optimal erleichtert, weil die Packung in der Deckelecke besonders steif ist. In dieser Ecke, nämlich an der Spitze oder Ausgießtülle der Ausgießöffnung wird den Aufreißkräften der größe Widerstand entgegengesetzt. Deshalb ist die Kraftwirkung beim Aufreißen durch den Zugsteg mit Vorteil auch in die Spitze der Verschließklappe hineingelegt. Durch die Anordnung der Ausgießöffnung in der Vertiefung und zusätzlich in der Ecke des Deckels kann beim Ausgießen auch der letzte Rest auslaufen.

Es ist dabei günstig, wenn der Griff nicht nur über den Zugsteg, sondern auch über eine dünne Haut aus Kunststoff mit der Verschließklappe verbunden ist, weil dadurch die Führung und Lage des Griffes bezüglich der Verschließklappe besser definiert ist und er bei der Herstellung besser gehalten wird. Beim Öffnen reißt die dünne Haut nach Anfassen des Griffes sehr schnell, so daß dann die einzige Verbindung zur Verschließklappe nur noch der Zugsteg ist. Die abgerissene dünne Verbindungshaut aus Kunststoff zwischen Deckel und Verschließklappe ist für den Benutzer auch ein Merkmal dafür, daß die Packung bereits einmal geöffnet war.

Bei weiterer vorteilhafter Ausgestaltung der Erfindung ist die Verschließklappe über einen Bund und eine diesen umgebende Schwächungslinie mit dem Deckel verbunden und auf der der Spitze der Ausgießöffnung gegenüberliegenden Seite mittels einer Anlenkachse unverlierbar am Deckel angelenkt und/oder ist mit einer Einrasteinrichtung im geöffneten Zustand am Deckel einrastbar. Die Verschließklappe schließt den Deckel nach der Herstellung und dem Füllen der Packung dichtend ab und soll gleichzeitig dazu dienen, nach dem erstmaligen Öffnen ein möglichst staubdichtes Wiederverschließen zu gewährleisten. Deshalb ist die Verschließklappe über einen Bund mit dem Deckel verbunden. Der Bund läuft im äußeren Bereich der Verschließklappe unter deren oberer oder äußerer ebener Wandfläche längs der Kante der Ausgießöffnung um. Nach oben oder außen mündet er also in die äußere oder obere ebene Wandfläche der Verschließklappe, und nach unten oder zum Inneren der Packung hin erstreckt er sich über eine dünne Verbindungskante hinaus nach innen. Diese dünne Verbindungskante ist die erwähnte Schwächungslinie, welche den Bund und damit die Verschließklappe mit dem Deckel verbindet. Die Schwächungslinie ist praktisch eine Sollbruchlinie und führt die Reißkräfte von der besagten Spitze der Verschließklappe bzw. Spitze der Ausgießöffnung nach hinten in den mittleren Bereich des Deckels bis zu den Enden der genannten Anlenkachse. Denkt man sich eine Linie durch diese gelegt, dann verläuft diese Linie senkrecht zur Längsrichtung der Ausgießöffnung oder etwa diagonal durch den viereckigen Deckel. Über diese Anlenkachse ist die Verschließklappe am Deckel unverlierbar angelenkt, wobei die Verschließklappe nicht mehr über eine mehr oder weniger lose Lasche verbunden ist. Die Verschließklappe befindet sich daher auch nach dem Öffnen in einer bezüglich der Ausgießöffnung definierten Lage und kann leichter wieder verschlossen werden. Außerdem ist sie mit einer Einrastöffnung so versehen, daß sie im geöffneten Zustand am Deckel einrastbar ist und geöffnet gehalten werden kann. Dies erleichtert ebenfalls die Handhabung und das Ausgiessen der erfindungsgemäßen Packung. Die Verschließklappe kann mit einem Griff geöffnet und in diesem Zustand durch Einrasten gehalten werden, so daß der Benutzer dann mit einem zweiten Griff ausgießen kann, ohne daß etwa der Ausgießstrahl im Falle von Flüssigkeiten mit der Verschließklappe in Berührung käme und durch diese verformt würde.

Weiterhin ist die Erfindung hinsichtlich der Einrasteinrichtung weiter dadurch gekennzeichnet, daß die Einrasteinrichtung eine an der Verschließklappe außen angebrachte Rastwulst und eine im Abstand gegenüberliegende, am Deckel angebrachte Nase mit Einrasthaken aufweist. Während die vorstehend erwähnte Anlenkachse im Bereich des Bundes mit der Verschließklappe verbunden ist, bildet der Bund im Bereich über der Anlenkachse einen Steg, welcher die Anlenkachse einerseits mit der Rastwulst andererseits verbindet. Die Rastwulst liegt dann in der äußeren oder oberen Ebene der Verschließklappe, ragt aber wulstartig etwas über diese hinaus. Im Abstand von diesem Steg, der ein Teil des Bundes an der Verschließklappe bildet, nämlich zum Mittelbereich des Deckels hin, befindet sich die erwähnte Rückwand, die auch die hintere Grenze der Vertiefung darstellt. An dieser Rückwand ist die Nase angebracht, die folglich im Abstand von der Verschließklappe, vom hinteren Teil des Bundes derselben und damit auch vom Steg und der oben außen an diesem angebrachten Rastwulst angeordnet ist. Klappt der Benutzer die Verschließklappe um die Anlenkachse nach oben hoch, so greift die Rastwulst unter den Einrasthaken, den sie wegbiegt, weil die Teile aus Kunststoff bestehen und biegsam sind. Danach rastet der Einrasthaken zurück in die Spritzstellung und greift hinter die Rastwulst, so daß die Verschließklappe in der geöffneten Stellung eingerastet ist.

Besonders zweckmäßig ist es dabei, wenn an der Rastwulst eine Schulter angeordnet ist, welche mit dem Einrasthaken der Nase durch Biegen in und außer Eingriff bringbar ist. Die Schulter befindet sich vorzugsweise auf der der Spitze der Verschließklappe zugewandten Seite der Rastwulst und bildet damit eine Art Widerhaken für den Eingriff mit dem erwähnten Einrasthaken der Nase. Um die Teile in Eingriff miteinander zu bringen, verformen sie sich bei Berührung gegenseitig und schnappen in die Spritzposition wieder zurück, wodurch sie dann in die Raststellung gelangen. Um aus dieser wieder herauszukommen, drückt der Benutzer lediglich die Verschließklappe in die Ausgießöffnung in Wiederverschließstellung, wodurch mittels Biegen (eine Art Gewaltanwendung) Einrasthaken und Nase wieder voneinander getrennt werden.

Bei einer bevorzugten Ausführungsform ist ferner vorgesehen, daß die Nase über eine an der Rückwand der Vertiefung befestigten Verstärkungsrippe mit dem Deckel verbunden ist und alle Teile der Einrasteinrichtung innerhalb der äußeren Deckelkonturen verbleibend angeordnet sind. Die Verstärkungsrippe versteift den gesamten Aufbau der Einrasteinrichtung, ohne die Biegemöglichkeiten zu beeinträchtigen. Außerdem befinden sich mit Vorteil alle Teile der Einrasteinrichtung in der gewünschten Außenkontur, so daß für den Transport und die Lagerung, auch das Übereinanderstapeln verschiedener Packungen, keine Nachteile entstehen.

Zur Begünstigung des Wiederverschließens ist es weiterhin zweckmäßig, wenn die Verschließklappe nahe ihrer Spitze an ihrem Bund Nocken aufweist. Die Nocken befinden sich in einem Abstand von zum Beispiel 3 bis 6 mm von der Spitze der Verschließklappe nach hinten zum Inneren des Deckels hin fest am Bund derart, daß beim Eindrücken der Wiederverschließklappe in die Ausgießöffnung die Nocken unter die Begrenzungskante der Ausgießöffnung einrasten und die Verschließklappe folglich in der wieder verschlossenen Position festhalten, bis über Hochziehen mittels des Griffes der Widerstand zwischen der Kante der Ausgießöffnung und den Nocken überwunden und die Verschließklappe herausgezogen ist.

Vorteilhaft ist es auch, wenn die Ausgießeinrichtung eine Gießkante aufweist, die neben der Ausgießöffnungsspitze am Deckel angespritzt ist, wobei die Ausgießöffnung an der tiefsten Stelle der Vertiefung des Deckels in der Ebene der Gießkante angeordnet ist. Durch das Anspritzen der Gießkante in der inneren unteren Ebene, d.h. der Ebene der Vertiefung, wird der Ausgießstrahl noch klarer definiert und geführt, so daß das Ausgießen für den Benutzer weiter erleichtert ist.

Weitere Vorteile und Anwendungsmöglichkeiten der vorliegenden Erfindung ergeben sich aus der folgenden Beschreibung eines bevorzugten Ausführungsbeispieles in Verbindung mit den Zeichnungen. Es zeigen:
- Figur 1: perspektivisch die Außenansicht einer Packung in der erfindungsgemäß quaderförmig vorgesehenen Form mit in Draufsicht viereckigem Deckel,
- Figur 2: eine vergrößerte Draufsicht auf den Deckel,
- Figur 3: eine Querschnittsansicht entlang der Linie III-III in Figur 2,
- Figur 4: eine Querschnittsansicht entlang der Linie IV-IV der Figur 2,
- Figur 5: eine vergrößerte Einzelheit entpsrechend der mit dem strichpunktierten Kreis V dargestellten Einzelheit in Figur 3,
- Figur 6: abgebrochen eine Draufsicht auf die Einzelheit gemäß Figur 5, d.h. wenn man in Figur 5 von oben nach unten blickt,
- Figur 7: eine vergrößerte und abgebrochene Schnittansicht entlang der Linie VII-VII in Figur 3,
- Figur 8: eine Querschnittsansicht gemäß Linie VIII-VIII in Figur 7 und
- Figur 9: eine vergrößerte und abgebrochene Darstellung der mit strichpunktiertem Kreis IX in Figur 3 herausgegriffenen Einzelheit.

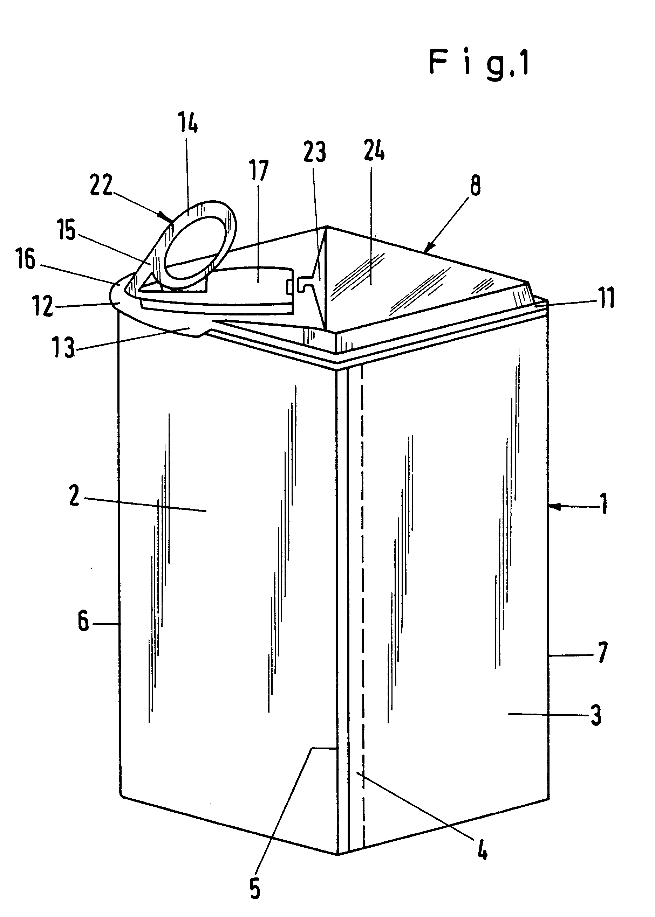

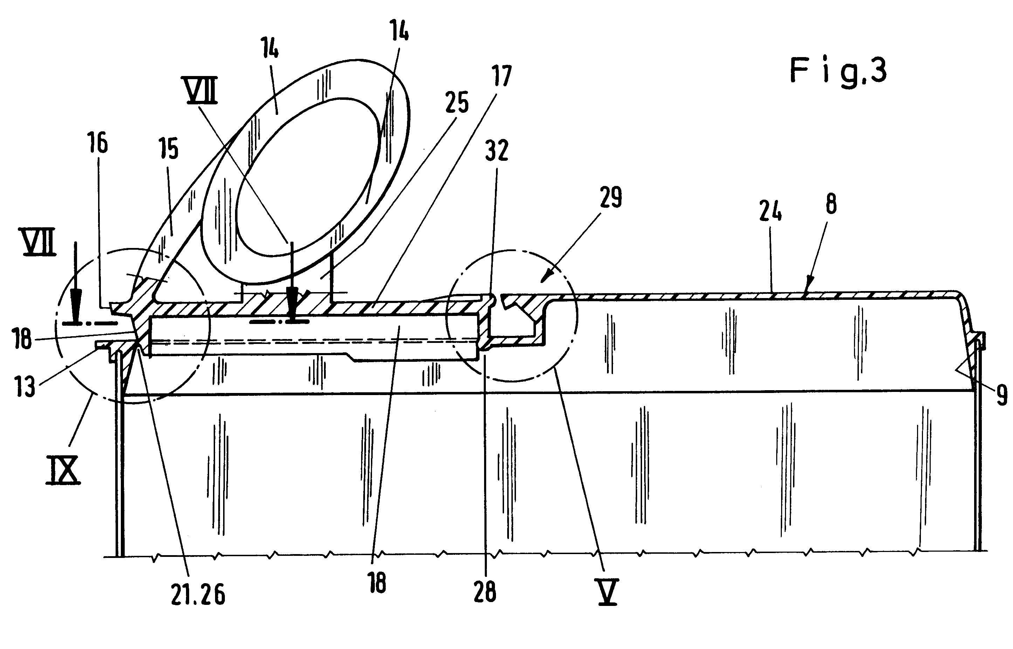

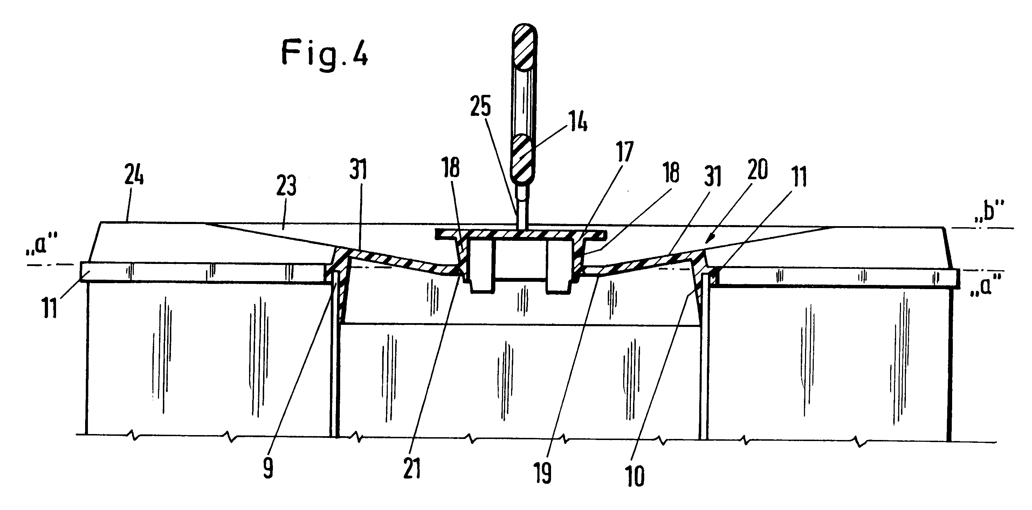

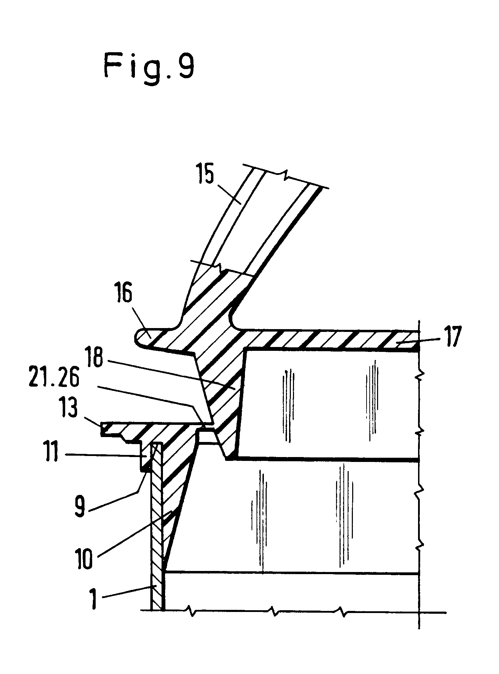

In der dargestellten Ausführungsform wird eine Flüssigkeitspackung gezeigt, die zur Distribution von Milch gedacht ist und perspektivisch in Figur 1 dargestellt ist. Vom Tubus 1 sieht man die Seitenwand 2 links und die Seitenwand 3 rechts, wobei die Längssiegelnaht 4 an der Kante 5 in der Ebene der Seitenwand 3 angeordnet ist. Während also die Kante 5 die Seitenwände 2 und 3 voneinander trennt, wird die Seitenwand 2 von der Kante 6 nach links hin und die Seitenwand 3 von der Kante 7 nach rechts hin begrenzt. Der durch Faltung mit Dreieckklappen und Quersiegelnaht gebildete Boden ist nicht dargestellt und daher auch nicht mit einer Bezugszahl versehen. Seine Bildung und Ausgestaltung ist ansich aus anderen Packungen bekannt. Der gegenüberliegend und in der hier vorgesehenen Beschreibung "oben" vorgesehene Deckel ist mit 8 bezeichnet. Er besteht aus thermoplastischem Kunststoff ohne Trägermaterial und ist längs der Oberkante 9 (Figuren 3, 4 und 9) am Tubus 1 angespritzt. Wie man aus den Figuren 3, 4 und insbesondere 9 erkennt, ist die freie Oberkante 9, die zunächst durch den Schnitt ohne Kunststoff freiliegt, vollständig mit dem thermoplastischen Kunststoffmaterial des Deckels 8 umspritzt, und zwar auf der Innenseite des Tubus 1 durch einen konisch verlaufenden Bund 10 und nach außen durch einen Schutzrand 11. Hierdurch ist bei der fertigen Packung verhindert, daß Flüssigkeit von irgendeiner Seite in die kunststofffreie Oberkante 9 eindringen und diese durch Quellen zerstören könnte.

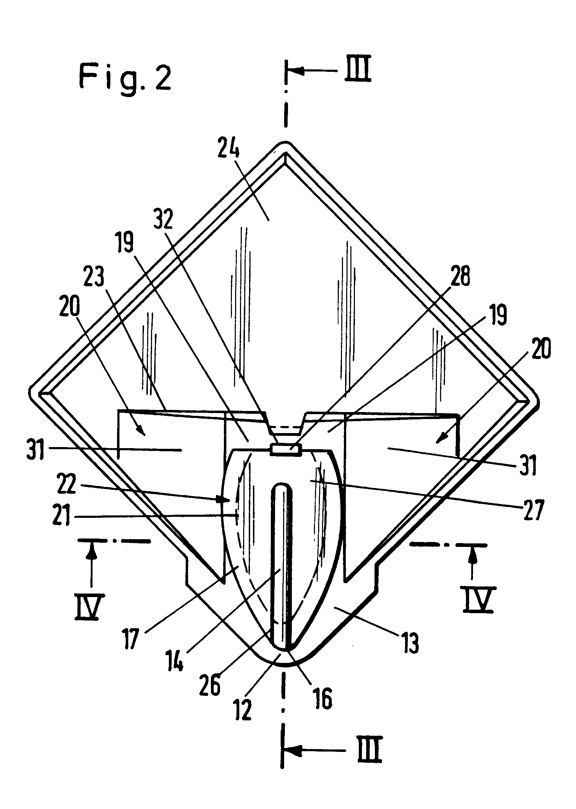

Der auf diese Weise an der Oberkante 9 des Tubus 1 angespritzte Deckel 8 hat in Draufsicht vier Ecken, wie man deutlich auch aus Figur 2 sieht, wobei an der (hier genannt) "vorderen" Ecke 12 eine Gießkante 13, die Ecke 12 vollständig umlaufend, angespritzt ist. Von außen erkennt man ferner deutlich den Griff 14 mit Zugsteg 15, der vorn nahe der Deckelecke 12 an der Spitze 16 an die Verschließklappe 17 angeformt ist. Die Verschließklappe ist über einen Bund 18 am unteren Wandfeld 19 (Figur 4) einer Vertiefung 20 längs einer Schwächungslinie 21 (Figuren 3, 4, 8 und 9) angespritzt. Die Vertiefung 20 befindet sich gemäß Draufsicht der Figur 2 im unteren oder vorderen Bereich mitsamt der allgemein mit 22 bezeichneten Ausgießeinrichtung, während gemäß Figur 2 über bzw. hinter der Rückwand 23 das äußere bzw. obere Wandfeld 24 vorgesehen ist. Aus Figur 2 sieht man, daß die größere Fläche des Deckels 8 von dem oberen Wandfeld 24 eingenommen wird, welches bei umgelegtem Griff 14 als Stand- und Stützfläche für die nächst darüberliegende Packung beim Stapeln, Lagern und Transport dient.

Nimmt der Endverbraucher die Packung zum Öffnen in die Hand und ergreift er den Griff 14, der über eine dünne Haut 25 (Figuren 3 und 4) mit der Verschließklappe 17 verbunden ist, und zieht er den Griff gemäß Figur 3 nach oben, dann reißt diese dünne Haut 25 ohne größeren Kraftaufwand, oft sogar schon beim Hochstellen des Griffes aus der in den Figuren nicht dargestellten Lage, nämlich umgefaltet auf die Verschließklappe 17 in die Horizontale. Danach wirkt die gesamte Zugkraft in Richtung des Zugsteges 15 auf die Spitze 16 der Verschließklappe 17 hin und wird an die in Figur 3 mit 21 bezeichnete Stelle der Schwächungslinie (die ebenfalls mit 21 bezeichnet ist) gerichtet, so daß dort die höchte Reißkraft wirkt und der Einreißvorgang beginnen kann. An dieser Stelle liegt also die Spitze 26 (Figuren 2, 3 und 9). Die gestrichelte, von dieser Spitze 26 ausgehende Schwächungslinie 21 (Figur 2) gibt die Grenzen der Ausgießöffnung 27 vor, die in Figur 2 eingezeichnet ist, obgleich in den Figuren die Verschließklappe 17 nicht herausgerissen und damit die Ausgießöffnung nicht in Draufsicht dargestellt ist.

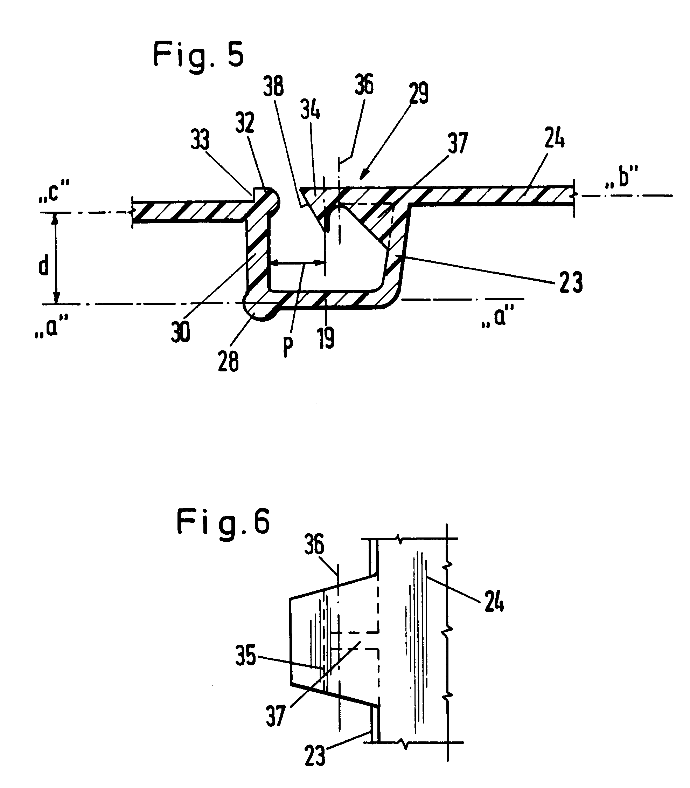

Auf der der Spitze 26 der Ausgießöffnung 27 gegenüberliegenen Seite, nämlich an den Enden der Schwächungslinie 21, befindet sich eine Anlenkachse 28 mit der allgemein mit 29 bezeichneten Einrasteinrichtung, die näher in den Figuren 5 und 6 beschrieben ist.

Diese Einrasteinrichtung 29 ist in Figur 3 mit dem strichpunktierten Kreis V bezeichnet und als Figur 5 in Querschnittsachsicht sowie als Figur 6 in Draufsicht deutlicher herausgezeichnet. Man erkennt jeweils im rechten Teil dieser Zeichnungsbilder das obere Wandfeld 24, die Rückwand 23 beim Übergang zur Vertiefung 20 und die Anlenkachse 28. Letztere ist nur so breit wie der Abstand zwischen den an der Deckelmitte hinten endenden Linien der Schwächungslinie 21, beim dargestellten Ausführungsbeispiel einer Einlitermilchverpackung kleiner gleich 8 mm. Es wurde oben bereits erwähnt, daß längs der Schwächungslinie 21 an der Verschließklappe 17 ein Bund 18 angeformt ist. Nach vorn läuft dieser spitz zu und endet an der Spitze 26 der Ausgießöffnung 27. Nach hinten in Richtung Deckelmittel endet er in einem Steg 30, welcher die Anlenkachse 28 aus der inneren oder unteren Ebene "a" (Figuren 4 und 5) zur sogenannten "mittleren Ebene" c" (Figur 5) über den Abstand d hinweg verbindet, nämlich in die Ebene "c" des Wandfeldes der Verschließklappe 17. Damit verläuft wie in Draufsicht auf einen Bootskörper unter diesem mittleren Wandfeld der Verschließklappe 17 umlaufend ein Bund in Gestalt des Bundes 18 und des Steges 30, wie in geschlossener Schleife.

Das untere Wandfeld 19 verläuft (Figur 4) beidseitig der Verschließklappe (17) etwa von der Gießkante 13 vorn bis nach hinten zur Rückwand 23, weshalb in Figur 5 rechts neben der Anlenkachse 28 ein Stück des unteren Wandfeldes 19 zu sehen ist. Dies ist auch in Figur 2 in Draufsicht angedeutet. Beidseitig des unteren Wandfeldes 19 schließt sich gemäß Figur 2 rechts und links je ein vorderes Schrägfeld 31 an, welches etwa Trapezform hat.

An der oberen hinteren Kante der Verschließklappe 19 ist in Gestalt eines Angusses eine Rastwulst 32 angeformt, auf deren der Verschließklappe zugewandten Seite eine Schulter 33 gebildet ist. Dieser Rastwulst 32 mit Schulter 33 gegenüberliegend im Abstand "p" befindet sich eine Nase 34 mit Einrasthaken 35, dessen Spitze gemäß Figur 5 nach unten zeigt und der in der Darstellung der Figur 6 als gestrichelte Linie wiedergegeben ist. Die in Figur 6 rechts danebenliegende strichpunktierte Linie 36 kennzeichnet gemäß Andeutung in Figur 5 eine verdünnte Stelle hinter der Nase 34 zur Rückwand 23 hin, wodurch die Nase 34 elastisch an der Rückwand 23 angelenkt ist. Eine Verstärkungsrippe 37 stützt die Nase 34 gegen die Rückwand 23 ab und verstärkt die von der Rückwand 23 zur Verschließklappe 17 hin hinausragend angeordnete Nase etwas.

Im Betrieb arbeitet die Einrasteinrichtung 29 nach dem Aufreißen der Ausgießeinrichtung 22 und Freilegen der Ausgießöffnung 27 derart, daß die Verschließklappe um die Anlenkachse 28 gemäß Figur 5 nach rechts oben geschwenkt wird, wobei die Verstärkung 32 mit der Schulter 33 im Uhrzeigersinn nach rechts gegen die Schrägfläche 38 der Nase 34 anfährt und die Nase 34 dadurch etwas nach rechts oben hochbiegt, bis die Schulter 33 hinter den Einrasthaken 35 einschnappt. In diesem Augenblick schnappt auch die hochgebogene Nase 35 wieder in die Endformposition gemäß Figur 5 zurück, und damit ist die Verschließklappe in der geöffneten Position arretiert. Da alle Teile aus thermoplastischem Kunststoff bestehen, versteht es sich, daß zum Wiederverschließen der Benutzer auf die Verschließklappe 17 nur einen kleinen Fingerdruck auszuüben braucht, um die Nase 34 mit Einrasthaken 35 wiederum zum Biegen und Nachgeben zu veranlassen, so daß die Schulter 33 vom Einrasthaken 35 frei kommt.Dann läßt sich über den Bund 18 die Verschließklappe 17 ohne weiteres in die Ausgießöffnung 27 einführen.

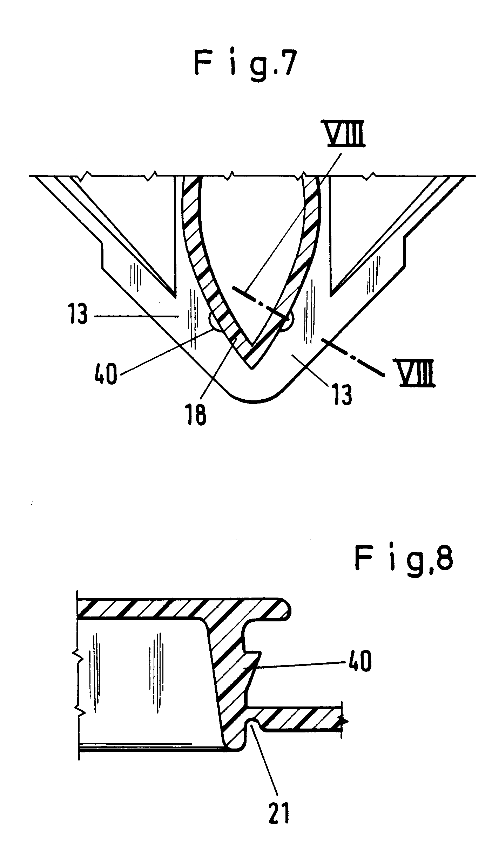

Wenn ferner gemäß Darstellung der Figuren 7 und 8 Nocken 40 am Bund 18 im Abstand von der Spitze 26 der Ausgießöffnung 27 angebracht sind, dann läßt sich ein recht festes Haften durch Eindrücken der Verschließklappe in die Ausgießöffnung 7 hinein ermöglichen. Die Ausgießeinrichtung 22 ist dann nicht nur staubfrei, sondern im gewissen Grade sogar flüssigkeitsdicht verschlossen; wenigstens soweit ein Ausschwappen bei kurzem Schräghalten der wiederverschlossenen Packung betroffen ist.

Nach der Herstellung, dem Füllen und Verschließen der Packung wird der Griff 14 aus der zum Beispiel in den Figuren 3 und 4 dargestellten Position (vertikale Position) in die Horizontale umgelegt. Dadurch gelangt auch der Griff 14 in das Volumen innerhalb der gesamten Außenkontur der Packung, d.h. unter das äußere Wandfeld 24, welches in der sogenannten oberen Ebene "b" liegt. Die obere Fläche des umgelegten Griffes 14 kommt dann in die Ebene "b" zu liegen, so daß nicht nur das obere Wandfeld 24 sondern auch die Verschließklappe 17 über den Griff 14 als Standfläche für darüberstehende Packungen dient.

Bei Linkshändern würde man unter Betrachtung der Figur 1 die Längssiegelnaht 4 nicht neben die Kante 5 legen, sondern an die der Kante 5 diametral gegenüberliegende Kante, die in Figur 1 als einzige Seitenlängskante nicht bezeichnet ist. Der normale Endverbraucher wird aber als Rechtshänder angesehen, welcher die Packung zum Ausgießen also mit der rechten Hand hält. Dieser Benutzer legt dann den Daumen der rechten Hand etwa im Bereich der mittleren Höhe in die Nähe der Kante 5, während die anderen vier Finger der rechten Hand auf der nicht dargestellten hinteren Seitenwand ruhen, nämlich direkt hinter der Tubuskante 7. Der Daumen bringt infolge der kleinen Fläche den größten Druck auf, und die Packung sollte an dieser Stelle besonders steif sein. Liegt die Längssiegelnaht 4 in der Ebene der Seitenwand 3 und neben der Tubuskante 5, dann erkennt der Fachmann sofort, daß in Druckrichtung des Daumens die größte Steifigkeit gegeben ist. Dies wird noch dadurch verstärkt, daß die Faserrichtung des Papiers des Tubus 1 in Richtung quer zur Längssiegelnaht 4 verläuft.

## Patentansprüche

1. Packung für fließfähige Füllgüter mit einem durch mindestens eine Längssiegelnaht (4) gebildeten Tubus (1), an dessen Enden Boden und Deckel (8) angebracht sind, von denen der Deckel (8) aus thermoplastischem Kunststoff ohne Trägermaterial besteht, an dem Tubus (1) längs dessen Oberkante (9) angespritzt ist und eine Ausgießeinrichtung (22) aufweist, wobei der Tubus (1) aus mindestens einseitig mit thermoplastischem Kunststoff beschichtetem Trägermaterial, zum Beispiel Karton, besteht, der Boden viereckig ist und aus dem umgefalteten Tubus (1) der Packung als Faltverschluß ausgebildet ist,
**dadurch gekennzeichnet,** daß die Packung über ihre gesamte Höhe vom Boden bis zur äußeren Ebene (b) des Deckels (8) einen viereckigen Querschnitt hat, die Papierfasern des Tubusmaterials quer zur Längssiegelnaht (4) ausgerichtet sind, die Längssiegelnaht (4) nahe einer Kante (5) des Tubus (1) angeordnet ist, der Deckel (8) in Draufsicht viereckig ist und die Ausgießeinrichtung (22) mit angespritztem Griff (14) im wesentlichen innerhalb der quaderförmigen, durch die Höhe und die vier Kanten des Querschnittes vorgegebenen Außenkontur der Packung angeordnet ist.

2. Packung nach Anspruch 1, dadurch gekennzeichnet, daß die in einer Ecke (12) und in einer Vertiefung (20) des Deckels (8) angeordnete Ausgießeinrichtung (22) eine mit einer Verschließklappe (17) versehene, etwa ovale und an einer Stelle im wesentlichen in eine Spitze (26) auslaufende Ausgießöffnung (27) aufweist, deren Spitze (26) nahe der Deckelecke (12) liegt.

3. Packung nach Anspruch 1 oder 2, dadurch gekennzeichnet, daß die Längssiegelnaht (4) nahe derjenigen Tubuskante (5) angeordnet ist, welche nächst der unter der Ausgießöffnungsspitze (26) liegenden Tubuskante (6) angeordnet ist.

4. Packung nach einem der Ansprüche 1 bis 3, dadurch gekennzeichnet, daß der Griff (14) mit der Verschließklappe (17) über einen Zugsteg (15) an der Spitze (16) der Verschließklappe (17) im Bereich der Ausgießöffnungsspitze (26) verbunden ist und auf die ebene Fläche der Verschließklappe (17) umfaltbar ist (Figur 3).

5. Packung nach einem der Ansprüche 2 bis 4, dadurch gekennzeichnet, daß die Vertiefung (20) des Deckels (8) die gesamte Ausgießeinrichtung (22) umgibt und durch vordere Schrägfelder (31) sowie eine Rückwand (23) gebildet ist (Figuren 2 und 4).

6. Packung nach einem der Ansprüche 1 bis 5, dadurch gekennzeichnet, daß die Verschließklappe (17) über einen Bund (18) und eine diesen umgebende Schwächungslinie (21) mit dem Deckel (8) verbunden ist und auf der der Spitze (26) der Ausgießöffnung (27) gegenüberliegenden Seite mittels einer Anlenkachse (28) unverlierbar am Deckel (8) angelenkt und/oder mit einer Einrasteinrichtung (29) im geöffneten Zustand am Deckel (8) einrastbar ist.

7. Packung nach Anspruche 6, dadurch gekennzeichnet, daß die Einrasteinrichtung (29) eine an der Verschließklappe (17) außen angebrachte Rastwulst (32) und eine im Abstand (p) gegenüberliegende, am Deckel (8) angebrachten Nase (34) mit Einrasthaken (35) aufweist (Figuren 5 und 6).

8. Packung nach Anspruch 7, dadurch gekennzeichnet, daß an der Rastwulst (32) eine Schulter (33) angeordnet ist, welche mit dem Einrasthaken (35) der Nase (34) durch Biegen in und außer Eingriff bringbar ist (Figur 5).

9. Packung nach Anspruch 7 oder 8, dadurch gekennzeichnet, daß die Nase (34) über eine an der Rückwand (23) der Vertiefung (20) befestigte Verstärkungsrippe (37) mit dem Deckel (8) verbunden ist und alle Teile (32-37) der Einrasteinrichtung (29) innerhalb der äußeren Deckelkonturen verbleibend angeordnet sind (Figur 5).

10. Packung nach einem der Ansprüche 2 bis 9, dadurch gekennzeichnet, daß die Verschließklappe (17) nahe ihrer Spitze (16) an ihrem Bund (18) befestigte Nocken (40) aufweist (Figuren 7 und 8).

11. Packung nach einem der Ansprüche 1 bis 10, dadurch gekennzeichnet, daß die Ausgießeinrichtung (22) eine Gießkante (13) aufweist, die neben der Ausgießöffnungsspitze (26) am Deckel (8) angespritzt ist, wobei die Ausgießöffnung (27) an der tiefsten Stelle der Vertiefung (20) des Deckels (8) in der Ebene (19) der Gießkante (13) angeordnet ist.

## Claims

1. A pack for fluid goods having a tube (1) formed by at least one longitudinal sealing weld (4), at the ends of which a bottom and a lid (8) are arranged, of which the lid (8) consists of thermoplastics material without supporting material, is moulded along the upper edge (9) of the tube (1) and has a pouring device (22), wherein the tube (1) is formed at least on one side from thermoplastics coated supporting material, such as cardboard, for example, the bottom is quadrangular, and is formed from the folded over tube (1) of the pack as a folded closure,
characterised in that the entire height of the pack from the bottom to the outer plane (b) of the lid (8) is of a quadrangular cross-section, the paper fibres of the tube material are oriented transversely to the longitudinal weld seam (4), the longitudinal weld seam (4) is arranged close to one edge (5) of the tube (1), the lid (8) is quadrangular in the plan view, and the pouring device (22) with the moulded handle (14) is arranged basically within the quadrangular shaped outer contour of the pack, defined by the height and four edges of the cross-section.

2. A pack according to Claim 1, characterised in that the pouring device (22) arranged in one corner (12) and in a depression (20) of the lid (8) has an approximately oval pouring opening (27) provided with a closure flap (17), which pouring opening extends at one location into a point (26), the point (26) being disposed close to the corner (12) of the lid.

3. A pack according to Claim 1 or 2, characterised in that the longitudinal weld seam (4) is arranged close to the edge (5) of the tube which is arranged next to the edge (6) of the tube disposed beneath the pouring opening point (26).

4. A pack according to one of Claims 1 to 3, characterised in that the handle (14) with the closure flap (17) is joined by way of a strap (15) to the point (16) of the closure flap (17) in the region of the pouring opening point (26), and can be folded over on to the flat surface of the closure flap (17) (Figure 3).

5. A pack according to one of Claims 2 to 4, characterised in that the depression (20) of the lid (8) surrounds the pouring device (22) as a whole and is formed by front sloping areas (31) and by a rear wall (23) (Figures 2 and 4).

6. A pack according to one of Claims 1 to 5, characterised in that the closure flap (17) is joined to the lid (8) by way of a flange (18) and a weakening line (21) surrounding the flange, and is pivotally and non-releasibly connected to the lid (8) on the side oppositely disposed to the point (26) of the pouring opening (27) by means of a hinged axis (28) and/or is engageable with the lid (8) by way of an engagement means (29) when in the open condition.

7. A pack according to Claim 6, characterised in that the engagement means (29) has a retaining bead (32) arranged on the outside of the closure flap (17) and a lug (34) with engagement hooks (35) arranged at a spacing (p) away on the lid (8) in oppositely disposed relationship. (Figures 5 and 6).

8. A pack according to Claim 7, characterised in that arranged on the retaining bead (32) is a shoulder (33) which can engaged with and disengaged from the engagement hook (35) of the lug (34) by bending (Figure 5).

9. A pack according to Claim 7 or Claim 8, characterised in that the lug (34) is joined to the lid (8) by way of a reinforcing rib (37) fixed to the rear wall (23) of the depression (20), and all parts (32-37) of the engagement device (29) remain arranged inside the outer contour of the lid (Figure 5).

10. A pack according to one of Claims 2 to 9, characterised in that the closure flap (17) has cams (40) which are secured to its flange (18), close to its point (16).

11. A pack according to one of Claims 1 to 10, characterised in that the pouring device (22) has a pouring edge (13) which is moulded to the lid (8) adjacent to the pouring opening point (26), wherein the pouring opening (27) is arranged at the lowest place of the depression (20) in the lid (8) in the plane (19) of the pouring edge (13).

## Revendications

1. Emballage pour produits fluides, comportant un tube (1), formé d'au moins un joint thermoscellé longitudinal (4), tube en l'extrémité duquel sont rapportés un fond et un couvercle (8), le couvercle (8) étant constitué d'une matière thermoplastique sans matériau support, auquel le tube (1) est rapporté par injection le long de son arête supérieure (9) et comporte un dispositif verseur (22), tandis que le tube (1) est constitué, sur au moins une face, d'un matériau support enduit d'une matière thermoplastique, par exemple le carton, le fond étant quadrangulaire et constitué du tube replié (1) de l'emballage, servant de fermeture par pliage, caractérisé en ce que l'emballage a, sur toute sa hauteur allant du fond au plan extérieur (b) du couvercle (8), une section transversale quadrangulaire ; que les fibres de papier du matériau du tube sont orientées perpendiculairement au joint thermoscellé longitudinal (4) ; que le joint thermoscellé longitudinal (4) est disposé au voisinage d'une arête (5) du tube (1) ; que le couvercle (8) est quadrangulaire quand on le regarde en vue de dessus ; et que le dispositif verseur (22), avec une poignée (14) rapportée par injection, est disposé essentiellement à l'intérieur du contour extérieur parallélépipédique de l'emballage, contour prédéfini par la hauteur et les quatre arêtes de la section transversale.

2. Emballage selon la revendication 1, caractérisé en ce que le dispositif verseur (22) disposé dans un coin (12) et dans un renfoncement (20) du couvercle (8) comporte un orifice verseur, pourvu d'un rabat de fermeture (17), sensiblement ovale et se poursuivant en pointe essentiellement pour donner une pointe (26), orifice verseur dont la pointe (26) se trouve au voisinage du coin (12) du couvercle.

3. Emballage selon la revendication 1 ou 2, caractérisé en ce que le joint thermoscellé longitudinal (4) est disposé au voisinage de l'arête de tube (5) qui est disposée le plus près de l'arête de tube (6) se trouvant en-dessous de la pointe (26) de l'orifice verseur.

4. Emballage selon l'une des revendications 1 à 3, caractérisé en ce que la poignée (14) est reliée au rabat de fermeture (17) par l'intermédiaire d'une traverse de traction (15), contre la pointe (16) du rabat de fermeture (17) dans la zone de la pointe (26) de l'orifice verseur, et peut être repliée sur la surface plane du rabat de fermeture (17) (Figure 3).

5. Emballage selon l'une des revendications 2 à 4, caractérisé en ce que le renfoncement (20) du couvercle (8) entoure la totalité du dispositif verseur (22) et est formé par des panneaux inclinés avant (31) et par une paroi arrière (23) (Figures 2 et 4).

6. Emballage selon l'une des revendications 1 à 5, caractérisé en ce que le rabat de fermeture (17) est relié au couvercle (28) par l'intermédiaire d'une collerette (18) et d'une ligne d'affaiblissement (21) entourant cette dernière, et, sur le côté opposé à la pointe (26) de l'orifice verseur (27), est d'une manière imperdable articulé au couvercle (8) à l'aide d'un axe d'articulation (28) et/ou peut à l'aide d'un dispositif d'encliquetage (29) à l'état ouvert, entrer en prise avec le couvercle (8).

7. Emballage selon la revendication 6, caractérisé en ce que le dispositif d'encliquetage (29) comporte un renflement d'arrêt, rapporté extérieurement au rabat de fermeture (17), et un taquet (34), avec un crochet d'encliquetage (35), opposé à une distance (p) et rapporté au couvercle (8) (Figures 5 et 6).

8. Emballage selon la revendication 7, caractérisé en ce qu'au renflement d'arrêt (32) est rapporté un épaulement (33), qui par pliage peut entrer en prise avec le crochet d'encliquetage (35) du taquet (34), ou peut en être désengrené (Figure 5).

9. Emballage selon les revendications 7 ou 8, caractérisé en ce que le taquet (34) est relié au couvercle (8) par l'intermédiaire d'une nervure de renforcement (37) fixée à la paroi arrière (23) du renfoncement (20), et que toutes les pièces (32-37) du dispositif d'encliquetage (29) sont disposées à demeure à l'intérieur des contours extérieurs du couvercle (Figure 5).

10. Emballage selon l'une des revendications 2 à 9, caractérisé en ce que le rabat de fermeture (17) comporte au voisinage de sa pointe (16) des saillies (40) fixées à sa collerette (18) (Figures 7 et 8).

11. Emballage selon l'une des revendications 1 à 10, caractérisé en ce que le dispositif verseur (22) comporte une arête de versement (13), qui est rapportée par injection au couvercle (8) à côté de la pointe (26) de l'orifice verseur, l'orifice verseur (27) étant disposé en le point le plus bas du renfoncement (20) du couvercle (8), dans le plan (19) de l'arête de versement (13).
